# EUROPEAN PATENT SPECIFICATION

(11) **EP 3 774 377 B1**
(45) Date of publication and mention of the grant of the patent: **07.06.2023**
(21) Application number: 19714742.4
(22) Date of filing: 20.03.2019
(51) Int. Cl.: B42D 25/373, B42D 25/378, B42D 25/351, B42D 25/29, B42D 25/45

(54) **SECURITY PRINT MEDIA AND METHOD OF MANUFACTURE THEREOF**
SICHERHEITSDRUCKMEDIEN UND VERFAHREN ZUR HERSTELLUNG DAVON
SUPPORTS D'IMPRESSION DE SÉCURITÉ ET LEUR PROCÉDÉ DE FABRICATION

(30) Priority: 10.04.2018 GB 201805901
(43) Date of publication of application: 17.02.2021
(73) Proprietor: De La Rue International Limited, Basingstoke, Hampshire RG22 4BS (GB)
(72) Inventor: ECKFORD, Alan, Basingstoke Hampshire RG22 4BS (GB); DRAKE, Ben, Basingstoke Hampshire RG22 4BS (GB); SLEEP, Lindsay, Basingstoke Hampshire RG22 4BS (GB); MCLEAN, Sean, Basingstoke Hampshire RG22 4BS (GB)
(74) Representative: Gill Jennings & Every LLP
(86) International application number: PCT/GB2019/050789
(87) International publication number: WO 2019/197798

(56) References cited:
- WO-A1-2014/000020
- WO-A1-2017/055823
- WO-A1-2017/055824
- WO-A1-2017/055825
- US-A1- 2008 085 384

## Description

The present invention relates to security print media suitable for use in making security documents such as banknotes, identity documents, passports, certificates and the like, as well as methods for manufacturing such security print media, and security documents made from the security print media.

Security print media are document substrates which can be printed upon and otherwise processed into a security document. Traditional security print media include paper-based substrates, which may include integral security features such as security threads introduced to the substrate during paper-making, and watermarks. More recently, polymer-based security document substrates have gained popularity. Polymer document substrates, comprising typically a transparent or translucent polymer substrate with at least one opacifying layer coated on each side to receive print, have a number of benefits over conventional paper document substrates including increased lifetime due to their more robust nature and resistance to soiling. Polymer document substrates also lend themselves well to certain types of security features such as transparent windows which are more difficult to incorporate in paper-based documents.

One problem which polymer document substrates do encounter, however, is the build-up of static charge on the substrates during handling, due to the intrinsically insulative properties of the core material. This can lead to problems both during manufacture of the substrates (and/or of the security documents formed therefrom) and during subsequent handling of the finished security documents. For example, the static charges tend to cause sheets of the substrate to stick together, which can result in double-feeding of sheets and ultimately jamming of document handling machines such as ATMs. To reduce the effects of static charge, polymer document substrates of this sort may be provided with one or more anti-static layers, each coating the polymer substrate over or under the opacifying layers and providing an electrically conductive or at least dissipative route by which a static build-up on the substrate can discharge. Examples of security print media having such anti-static layers are disclosed in US-B-6,495,231, WO-A-2014/000020 and US-A-2008/085384.

Examples of security print media having opacifying layers are disclosed in WO-A-2017/055823, WO-A-2017/055825 and WO-A-2017/055824.

Improved means of addressing the problem of static charge in such security print media are sought.

In accordance with the present invention, a security print medium for forming security documents therefrom is defined in claim 1.

The present invention also provides a method of making a security print medium as defined in claim 15.

By providing the first anti-static layer in the form of a pattern as defined above, rather than as an all-over uniform coating, the present inventors have found that the amount of anti-static material required to manufacture the security print medium can be significantly reduced, whilst still enabling the medium to disperse static charge. This utilizes the available resources of anti-static material more efficiently, requiring less anti-static material to manufacture the security print medium, per unit volume. As indicated above, the pattern includes a plurality of gaps (in each of which the anti-static material is absent), spaced by portions of anti-static material which join together so as to form a conductive network which allows the dissipation of static charge across the media. By "anti-static material" we mean one which has at least a degree of electrical conductivity, sufficient to disperse static charge. It should be noted that not every one of the portions of anti-static material need be connected to every other one in order to achieve a conductive network - rather, there will need to be sufficient connections between the portions to form at least one, preferably more than one, continuous conductive pathway(s) between the different edges of the media. Examples will be provided below.

The security print medium may or may not include a window region (or more than one window region), which as discussed below are regions of lower opacity than the rest of the substrate due to the omission of one or more of the opacifying layers there. If there is one or more window region(s), the anti-static layer will be present across the substrate outside those window region(s), and in some preferred embodiments it may also be present in those window region(s), e.g. if the anti-static material is transparent.

It will be appreciated that neither the opacifying layer(s) nor the anti-static layer need be in direct contact with the surface of the polymer substrate. Rather, one or more additional (transparent or translucent) layers could be present between the polymer substrate and the opacifying layer(s) or anti-static layer, such as a primer layer. Nonetheless, the opacifying layer(s) and the anti-static layer are still considered to be disposed "on" the substrate surface in these circumstances.

As in conventional polymer document substrates (security print media), the function of the one or more opacifying layers (which are typically formed of a polymeric, non-fibrous, light-scattering material) is to render the majority of the document non-transparent and to provide a suitable background on which to print graphics, security patterns and other information as may be required on the finished security document. The opacifying layer(s) are not formed of anti-static material. However, as noted below, the first anti-static layer may optionally perform a dual function and hence may also contain an opacifying substance so as to additionally act as a further opacifying layer. In such cases, the anti-static material is preferably of substantially the same colour as that of the opacifying layer(s), e.g. white, off-white or light grey. Alternatively, the anti-static material could be of a contrasting colour to that of the opacifying layer(s), e.g. red, yellow, green or blue. This may be preferred in cases where it is desired that the pattern in the anti-static layer is visible, as discussed further below.

The first pattern may or may not be visible to a person handling the of security print media. In some embodiments, it is preferred that the first pattern is so visible, at least in transmitted light and preferably also in reflected light. This acts as an additional security feature, integral with the security print media itself, in much the same way as a watermark in conventional paper substrates. Unlike existing "imitation watermark" features in polymer document substrates, the pattern extends over the whole first section of the document and hence is not restricted to a small, standalone feature region. This makes it particularly difficult to counterfeit. Where the first pattern is visible, it may preferably be used to convey information, with the gaps and/or portions taking the form of indicia such as alphanumerical characters, currency symbols, logos or the like. Various ways for achieving visibility of the pattern are exemplified below.

In other preferred embodiments, in the at least a first section of the area of the polymer substrate, the security print medium appears substantially uniform and unpatterned to the naked eye. That is, the first pattern is not visible to the observer, at least without close inspection and/or magnification. This may be advantageous so as not to detract from the appearance of any graphics layer or other features later applied onto the security print medium: the security print medium provides a plain, uniform background.

This can be achieved in a number of ways. In one preferred example, the anti-static material of the first anti-static layer is substantially transparent and colourless. As such, its pattern will intrinsically not affect the appearance of the security print medium. Examples of suitable anti-static materials with these properties are disclosed in WO-2014/000020. In such embodiments, the first anti-static layer may preferably additionally extend across all or part of any window region.

In other preferred embodiments, the anti-static material of the first anti-static layer is semi-opaque. That is, as noted above, the first anti-static layer also acts as a further opacifying layer. This will be necessary if the first pattern is to be visible to the observer. However, if the first pattern is not to be visible, it is still possible to use such a semi-opaque anti-static material. For instance, the size and arrangement of the gaps and portions making up the first pattern can be configured so that the pattern is substantially indistinguishable to the naked eye. For example it has been found that gap/portion widths of 300 microns or less are difficult for the human eye to perceive, especially once combined with a uniform, all-over opacifying layer which reduces the visual contrast between the gap locations and the portion locations. Periodic patterns in which the array of gaps is uniform are also beneficial in this regard.

The security print medium may have a single anti-static layer as already described. However, preferably another anti-static layer is provided on the other side of the polymer substrate, in order that static charge build-up on both surfaces of the media can be prevented. Thus, in a preferred embodiment, the first anti-static layer is disposed on the first surface of the polymer substrate, and the security print medium further comprises a second anti-static layer disposed on the second surface of the polymer substrate, the second anti-static layer comprising an anti-static material, preferably a semi-opaque anti-static material. It should be noted that the anti-static material forming the second anti-static layer could be the same or different from that forming the first anti-static layer. For example, one could be transparent, and the other semi-opaque. In particularly preferred embodiments, both are semi-opaque.

Similarly, the second anti-static layer need not be patterned, but could instead be an all-over uniform coating of anti-static material. For instance, this may be desirable where the first pattern is intended to be visualised by the user, so as to avoid any interference between two overlapping patterns. However, so as to further increase the efficiency of material usage, preferably in at least a second section of the area of the polymer substrate, the second anti-static layer is arranged according to a second pattern defining a two-dimensional array of gaps in which the anti-static material of the first anti-static layer is absent, spaced by portions in which the anti-static material of the first anti-static layer is present. The second section could have any lateral position on the substrate area, which may or may not be related to the position of the first section. For example, the first section may occupy one lateral half of the substrate area, and the second section may occupy the other lateral half of the substrate area. The two portions could also have different (or the same) sizes and/or shapes from one another. However in preferred embodiments, the second section at least partially overlaps, and preferably entirely overlaps the first section of the area of the polymer substrate. In this way, the two patterns can be configured to together influence the appearance of the same part of the security print medium (where both anti-static layers are formed of semi-opaque materials).

The second pattern could be different from or the same as the first pattern. For instance, where it is desired to be able to visualise one or both patterns in the finished product, the two patterns could each be configured to exhibit different indicia, which may be positioned with a lateral offset so that both indicia appear beside one another when the finished product is viewed. For instance, one pattern could define gaps having the shape of a currency symbol (such as "£" or "$") and the other pattern could define gaps having the shape of a denomination value (such as "5" or "10") so that in combination the patterns would appear together to show a composite piece of information (e.g. "£5" or "$10"). Alternatively, to enhance the visibility of the pattern, both anti-static layers could exhibit the same pattern in alignment with one another so that the visible contrast between the gap areas and the adjacent portions is increased. These implementations of course assume that both anti-static layers are formed of semi-opaque materials.

In other preferred embodiments, where the security print medium is to appear visually uniform and unpatterned, the first and second patterns can be configured to help conceal one another's presence (again, assuming both anti-static layers are formed of semi-opaque material). For example, one can visually interfere with the other so as to increase the overall visual uniformity of the area where the first and second sections overlap. One preferred way to achieve this is to angularly offset the two patterns relative to one another. Thus, preferably, the first and second patterns have a non-zero angular offset relative to one another in the plane of the security print medium. This works particularly well where both patterns are periodic in two dimensions and, even more preferably, are the same as one another. It is desirable that the angular offset is configured so as not to give rise to moiré interference effects between the first and second patterns. Methods for achieving this are well known and it has been found that angular offsets in the range of about 20 to about 35 degrees are particularly suitable. In other cases, the two patterns may or may not be angularly offset but the respective patterns are designed to visually conceal one another.

In still further preferred embodiments, one or more of the opacifying (non-anti-static) layers could be patterned in such a way as to help visually conceal the presence of the first pattern in the first anti-static layer (and/or the second pattern in the second anti-static layer. For instance, one or more of the opacifying layers could be arranged according to a pattern in the first section of the area of the polymer substrate which is a negative version of the first pattern, and aligned therewith. Similarly, one or more of the opacifying layers could be arranged according to a pattern in the second section of the area of the polymer substrate which is a negative version of the second pattern, and aligned therewith. In this way, the contrast between the various elements of each pattern is reduced overall. Again, this assumes that the anti-static layer(s) are formed of semi-opaque material.

In other preferred embodiments, it is desirable for all the opacifying layers overlapping the patterned anti-static layer(s) to be uniform and unpatterned. This avoids any need to register the first and/or second patterns to the opacifying layers. Hence preferably, at least in the first section of the area of the polymer substrate, all of the one or more opacifying layers are arranged uniformly across the first section in an unpatterned manner. If a second patterned anti-static layer is provided, preferably also in the second section of the area of the polymer substrate, all of the one or more opacifying layers are arranged uniformly across the second section in an unpatterned manner.

While reducing the coverage of anti-static material across the polymer substrate by patterning the first (and optionally second) anti-static layer as already described is beneficial in terms of material efficiency, it is necessary to balance this reduction against any effect on the ability of the security print media to discharge static (and optionally also against the visibility of the pattern). The present inventors have found that the most preferred combination of the two effects is achieved where, on average across the first and/or second section(s), the portions of material defined by the first and/or second pattern(s) cover no more than 75% of the surface area, and preferably no less than 25% of the surface area.

In especially preferred implementations, the gaps in the first and/or second pattern(s) are at least 50 microns wide, preferably at least 100 microns wide, more preferably at least 200 microns wide. Further preferably, the gaps in the first and/or second pattern(s) are no more than 1000 microns wide, preferably no more than 500 microns widen more preferably no more than 300 microns wide. Advantageously, the portions in the first and/or second pattern(s) are at least 50 microns wide, preferably at least 100 microns wide, more preferably at least 200 microns wide. Desirably, the portions in the first and/or second pattern(s) are no more than 1000, preferably no more than 500 microns wide, more preferably no more than 300 microns wide.

In especially preferred implementations, wherein the portions of the first and/or second pattern(s) surround the gaps and form a contiguous conductive background across the respective pattern. This ensures the greatest number of conductive paths through the anti-static layer.

Preferably, the gaps in the first and/or second pattern(s) are square, rectangular, circular, triangular, hexagonal or take the form of indicia such as alphanumeric characters or symbols. Square or rectangular gaps have been found to result in a pattern with the lowest surface resistivity, whilst circular or hexagonal gaps have been found to have the least visible impact.

It should be noted that the pattern(s) need not be uniform across their respective section(s) of the substrate. Different patterns could be provided in different locations within each section, such as different gap shape and/or size patterns, different pattern orientations and/or patterns with different gap:portion ratios. However, in preferred embodiments, each pattern is the same across its respective section.

The anti-static material(s) forming the first anti-static layer and/or the second anti-static layer can be of various different compositions. In general, it is preferred that the anti-static material(s) each comprise an electrically conductive polymer material, such as a static dissipative polymer gravure ink. This enables the anti-static layers to be applied by printing techniques for instance, and such materials are typically of appropriate conductivity levels. The electrically conductive polymer could be for instance a (intrinsically) conductive polymer or a polymeric binder having conductive particles dispersed therein. Examples will be given below.

Advantageously, the first anti-static layer and, if provided, the second anti-static layer are printed layers, formed preferably by gravure printing of the anti-static material. The term "printed layer" is intended to cover a layer formed of a suitable composition applied by any printing technique including conventional printing methods such as gravure, flexographic printing, lithography etc., in which the material is only applied in the desired locations in accordance with the pattern, but also ablation methods in which an all-over layer is applied and then selectively removed to leave the pattern, e.g. using a laser.

At least across the area in which the first (and/or second) anti-static layer is present (whether patterned or unpatterned), the security print medium desirably has an average surface resistivity of less than 10¹¹ Ohms/square (more preferably less than 10¹⁰ Ohms/square), and preferably greater than or equal to 10⁶ Ohms/square. Advantageously, for best product consistency, all of the surface resistivity measurements taken across this area should be less than 10¹¹ Ohms/square (more preferably less than 10¹⁰ Ohms/square), and preferably greater than or equal to 10⁶ Ohms/square - that is, if any one sample measurement has a value outside this range, the product may be rejected. Surface resistivity levels of this sort have been found effective at dissipating static charge. The surface resistivity is measured on the outer surface of the complete security print medium, at room temperature (20 to 25 degrees C) and a relative humidity of 50%.

Suitable methods for measuring the surface resistivity include using a concentric ring probe, such as the Trek Model 152-1 Surface/Volume Resistance Meter available from Trek, Inc (www.trekinc.com) or the Hiresta-UX MCP-HT800 resistivity meter available from Mitsubishi Chemical Analytech (www.mccat.co.jp/global/); or a parallel resistivity probe such as the ACL 395 Resistivity Meter from ACL Incorporated (www.aclstaticide.com). Full details of suitable test methods for insulating materials (surface resistivity greater than 10⁷ Ohms/square) are set out in ASTM standard D257, and for moderately conductive materials (surface resistivity less than or equal to 10⁷ Ohms/square) in ASTM standard D4496. As explained in the paper "Surface Resistivity and Surface Resistance Measurements using a Concentric Ring Probe Technique" by W.A. Maryniak et al, 2013 (Trek Application Note Number 1005, available at www.trekinc.com), surface resistivity is the ratio of voltage drop per unit length to the surface current per unit width. As such, the physical SI unit of surface resistivity is Ohms. However, to differentiate surface resistivity from the actual resistance of a particular surface (also measured in Ohms), it is conventional to use the units "Ohms/square" for surface resistivity. What this means in practice is that any square area of the surface in question (no matter what size) has the indicated resistivity value.

The first (and second, if a second patterned anti-static layer is provided) section can occupy any area of the first anti-static layer: the more of the layer is patterned (i.e. forms part of the first section), the greater the material saving achieved. Hence, in preferred implementations, the first and/or second section(s) each encompass at least 25% of the area of the polymer substrate, preferably at least 50% of the area of the polymer substrate, more preferably substantially the whole of the area of the polymer substrate excluding any window region(s).

As noted above, the security print media may or may not include a window region. In preferred embodiments, at least one window region is provided in order to increase the security level, and hence the one or more opacifying layers define at least one window region on the polymer substrate in which at least one, preferably at least half, more preferably all of the opacifying layers are absent, such that the at least one window region is of higher translucency than the remainder of the security print medium. A window region in which all the opacifying layers are absent is known as a "full window" whereas a window region in which some (but not all) of the opacifying layers are present is known as a "half window". Either or both could be provided. Advantageously, the at least one window region occupies no more than 10% of the surface area of the security print medium, preferably no more than 8%.

The opacifying layer(s) and anti-static layer(s) can be applied in various different orders to the polymer substrate. In particular, it is not necessary that all the opacifying layer(s) be applied, followed by all the anti-static layer(s), or vice versa. Rather, one or more of the opacifying layers may be applied, followed by the anti-static layer(s) and then other(s) of the opacifying layers. In preferred implementations, the one or more opacifying layers comprise a plurality of opacifying layers, and the first anti-static layer is located between one of the opacifying layers and the first surface of the polymer substrate. Most preferably, the first anti-static layer is located under (only) the outermost opacifying layer on the first surface of the substrate. If present, the second anti-static layer is also preferably located between one of the opacifying layers and the second surface of the polymer substrate. Again, most preferably the second anti-static layer is located under (only) the outermost opacifying layer on the second surface of the substrate. Desirably, there is also at least one opacifying layer between each of the anti-static layers and the respective surface of the polymer substrate, so each anti-static layer is "sandwiched" between two opacifying layers on each side of the substrate. Hence, preferably one of the opacifying layers is located between the first anti-static layer and the first surface of the polymer substrate, and one of the opacifying layers is located between the second anti-static layer, if present, and the second surface of the polymer substrate. In particularly preferred constructions, exactly two opacifying layers are provided on each surface of the substrate, with the first anti-static layer being located between the two opacifying layers on the first surface, and (if provided) the second anti-static layer being located between the two opacifying layers on the second surface.

The invention further provides a security document comprising a security print medium as described above, and at least one graphics layer applied on the outermost opacifying layer(s) on the first and/or second surfaces of the polymer substrate. The security document is preferably a bank note, an identification document, a passport, a licence, a cheque, a visa, a stamp or a certificate. The security document may additionally comprise one or more security features applied in the form of a patch, foil or stripe for instance. A corresponding method of manufacturing a security document comprises making a security print medium in accordance with the above-described method; and applying at least one graphics layer to the outermost opacifying layer(s) on the first and/or second surfaces of the polymer substrate. Typically the step of applying at least one graphics layer to the outermost opacifying layers will be carried out in a separate manufacturing process (e.g. at a different manufacturing facility and possibly by a different entity) from the manufacture of the security print media itself. The graphics layer can be applied using any available printing process such as gravure, flexographic, lithographic or intaglio printing, for example. The graphics layer may typically include security patterns such as fine line patterns or guilloches, information as to the nature of the security document such as denomination and currency identifiers for a banknote, and/or personalisation information such as a serial number on a banknote or bibliographic data of the holder on a passport.

Examples of security print media in accordance with the present invention will now be described with reference to the accompanying drawings, in which:
Figure 1 shows a first embodiment of a security print medium (a) in plan view, and (b) in cross-section, layers of the security print medium being shown spaced apart for clarity, Figures 1(c) and 1(d) showing second and third embodiments in cross-section;
Figure 2 shows a representative part of each of 60 examples of different patterns according to which the first and/or second anti-static layers may be arranged in embodiments of the invention;
Figure 3 shows a representative part of another example of a pattern according to which the first and/or second anti-static layers may be arranged in embodiments of the invention;
Figures 4(a) to (e) are graphs showing schematically the results of tests in which the average surface resistivity (mean of conductivity ⁻¹) of security print media formed in accordance with embodiments of the invention was measured for various examples having an anti-static layer in which (a) the line width of the pattern is varied, (b) the engraving specification / coatweight is varied; (c) the shape of the gaps is varied; (d) different anti-static materials are used; and (e) the viscosity of the anti-static material on application is varied;
Figure 5 depicts exemplary first and second patterns according to which first and second anti-static layers may be arranged in a further embodiment of the invention, and the corresponding appearance of the security print medium;
Figure 6 depicts exemplary first and second patterns according to which first and second anti-static layers may be arranged in another embodiment of the invention, and the corresponding appearance of the security print medium;
Figure 7 shows a further embodiment of a security print medium in cross-section;
Figure 8 depicts an exemplary first pattern according to which the first anti-static layer may be arranged in the embodiment of Figure 7 and an exemplary opacifying layer pattern, and the corresponding appearance of the security print medium;
Figures 9(a) and (b) each show a representative part two further examples of different patterns according to which the first and/or second anti-static layers may be arranged in embodiments of the invention;
Figure 10 depicts exemplary first and second patterns according to which first and second anti-static layers may be arranged in another embodiment of the invention, and the corresponding appearance of the security print medium;
Figure 11 shows a further embodiment of a security print medium (a) in plan view, and (b) in cross-section, layers of the security print medium being shown spaced apart for clarity, Figures 11(c) showing another embodiment in cross-section; and
Figure 12 shows a first embodiment of a security document (a) in plan view, and (b) in cross-section, layers of the security document being shown spaced apart for clarity.

The description below will focus on examples of security print media used in the production of banknotes. However, as mentioned above, the security print media could be used to form any type of security document, including passports (or individual pages thereof), identification cards, certificates, cheques and the like. Throughout this disclosure, the term "security print media" is used synonymously with the term "document substrate", meaning a medium which can then be printed upon and otherwise processed to form the desired security document, in a manner analogous to the printing and subsequent processing of a conventional paper substrate (albeit with processes adapted for use on polymer). Hence a "security print medium" does not encompass graphics layers and the like, which are later printed onto the security print medium to provide security patterns, indicia, denomination identifiers, currency identifiers etc. The combination of such a graphics layer and a "security print medium" (and optionally additional features such as applied foils, strips, patches etc.) is the "security document".

Throughout the following examples, the security print medium will be illustrated as having the same size and shape as a security document into which it is later formed. However, typically the security print medium will be formed as a web or sheet large enough to carry multiple repeats of the desired security document, and will then be cut into individual document either before, but more usually after, printing of the graphics layer and any other required processing steps.

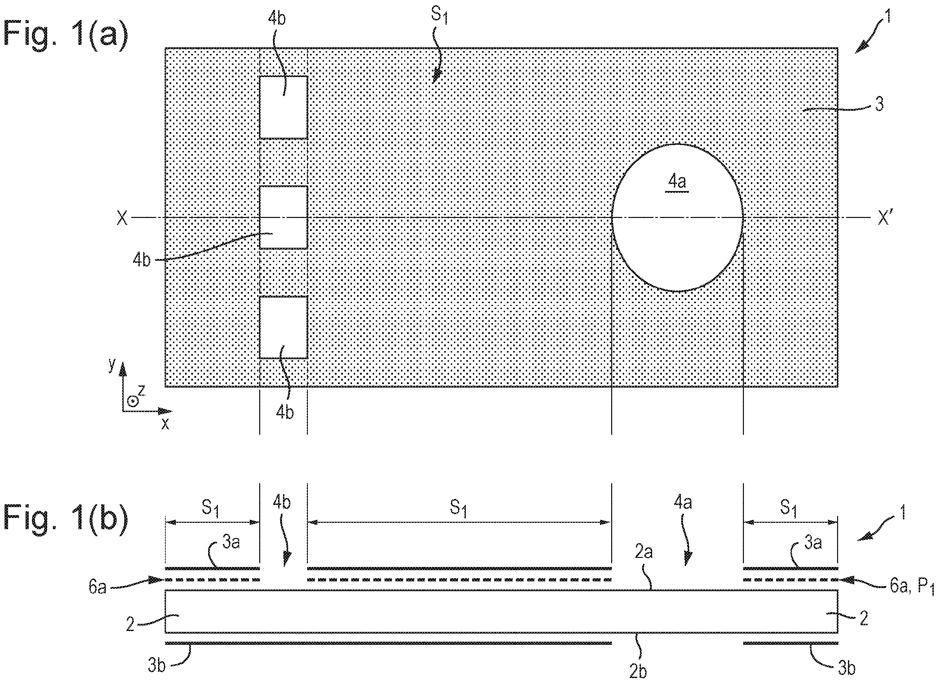

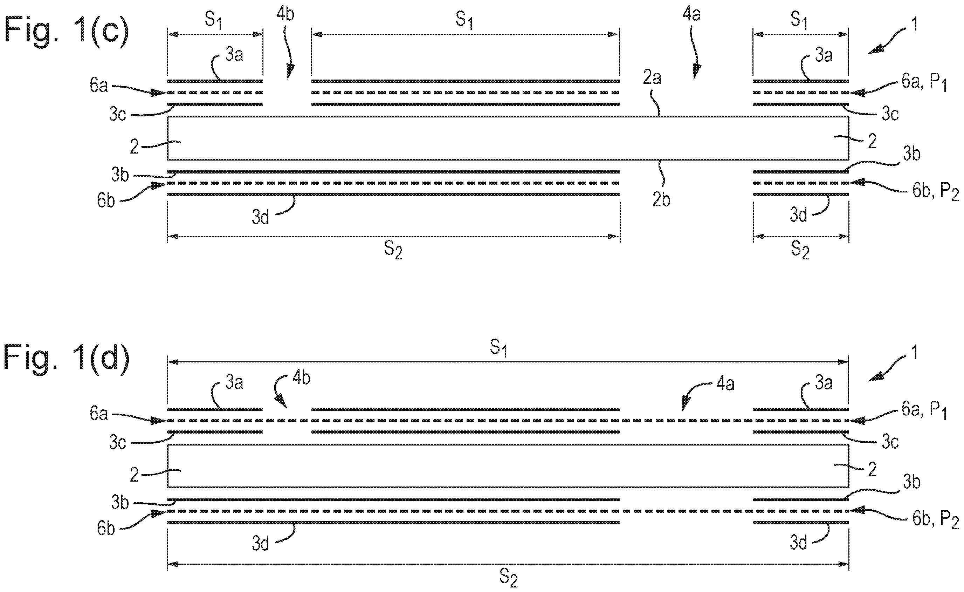

Figure 1 shows a first embodiment of a security print medium 1, Figure 1(a) showing a plan view and Figure 1(b) showing a cross-section along the line X-X'. It will be appreciated that in Figure 1(b) the various layers forming the security print medium 1 are shown spaced apart for clarity whereas in practice all of the layers will contact one another and form a cohesive unit. The same applies to all other cross-sections shown in other Figures.

As shown in Figure 1(a), substantially all of the medium 1 carries a coating 3 formed of one or more opacifying layers as described further below. This renders the medium non-transparent across the whole of the coated area and provides a suitable background for printing thereon. The coating 3 may optionally be omitted in certain areas of the medium to form window regions 4a and 4b, which are transparent or translucent (relative to the coated areas). Such relatively transparent areas may be provided as security features in their own right or may be later equipped with additional security devices during the manufacture of a security document using the medium 1, as described further below. In preferred examples the opacifying layers 3 cover at least 50% of the area of the security print medium corresponding to one security document, more preferably at least 80%. More preferably, the window region(s) 4a and 4b (if provided) occupy no more than 10% of the medium 1 so that the opacifying layers 3 cover at least 90% of its area.

As shown in the cross-section of Figure 1(b), the security print medium 1 comprises a polymer substrate 2, which is transparent (i.e. optically clear, but may be tinted) or translucent (i.e. optically scattering, but non-opaque). The polymer substrate 2 may be monolithic or could be multi-layered and may carry additional layers (not shown) on its first and/or second surfaces 2a, 2b such as a primer layer for improving the adhesion of outer layers. The polymeric substrate 2 may comprise BOPP or polycarbonate, for example.

The one or more opacifying layers (referred to collectively by the reference numeral 3) can be applied on one or both surfaces 2a, 2b of the polymer substrate 2. In this case, one opacifying layer is provided on each surface: opacifying layer 3a on the first surface 2a of the substrate 2, and opacifying layer 3b on the second surface 2b of substrate 2. Each opacifying layer 3 comprises a translucent, semi-opaque material which is preferably polymeric and non-fibrous, e.g. white ink. The opacifying layers 3 are each preferably substantially the same colour as one another (and are spatially uniform in colour), most preferably white or another light colour such as off-white or grey so that a later-applied graphics layer will contrast well against it. In preferred examples, the opacifying layers each have a brightness L* in CIE L*a*b* colour space of at least 70, preferably at least 80 and more preferably at least 90. Each opacifying layer 3 may individually have an optical density of between 0.1 and 0.5 for example, preferably around 0.2 (as measured on a transmission densitometer such as the MacBeth TD932, with an aperture area equivalent to that of a circle with a 1mm diameter). In window region 4a, all of the opacifying layers 3 are omitted such that this window region is a full window, whereas in window region 4b, only opacifying layer 3a is omitted while opacifying layer 3b continues across the region 4b, such that this window region is a half window.

Also provided is a first anti-static layer 6a, which in this example extends across the same area of the medium 1 as opacifying layer 3a. That is, it is present across substantially the whole medium, omitting the window regions 4a, 4b. The first anti-static layer 6a is formed of an anti-static material with sufficient electrical conductivity to disperse static charge. The anti-static material may be transparent or may itself be semi-opaque in which case anti-static layer 6a also acts as a further opacifying layer.

Across at least a first section S₁ of the medium 1 (which in this example comprises the whole area of the medium 1 excluding the window regions 4a, 4b), the anti-static layer 6a is arranged according to a first pattern P₁, of which examples will be given below. The first pattern defines a two dimensional array of gaps in which the anti-static material is absent, spaced by portions of anti-static material which connect together to form a conductive network across the layer 6a such that static charge can be effectively dispersed. Since less than 100% of the surface area of the medium 1 carries the anti-static material forming layer 6a, there is a saving in anti-static material.

Figure 1(c) shows a cross section through a second embodiment of a security print medium 1, which has the same plan view as shown in Figure 1(a). In this example, there are a total of four opacifying layers 3a, 3b, 3c and 3d. Opacifying layers 3a, 3c are provided on the first surface 2a of the polymer substrate 2 with first anti-static layer 6a between them, and opacifying layers 3b, 3d are provided on the second surface 2b of the polymer substrate 2 with a second anti-static layer 6b between them. It is preferable to provide such a second anti-static layer 6b on the second side of the substrate in order that static charge can be dispersed on both sides of the medium 1. Again, the layers 3a, 3c and 6a on the first surface 2a of the polymer substrate 2 are omitted in both of the window regions 4a, 4b whereas the layers 3b, 3d and 6b on the second surface 2b of the polymer substrate 2 are omitted in window region 4a but not in window region 4b.

The first and second anti-static layers 6a, 6b are both formed from anti-static materials which may be the same or different from one another. One may be transparent and the other semi-opaque, or both transparent or both semi-opaque. One or both of the anti-static layers 6a, 6b will be patterned. The first anti-static layer 6a may be patterned as described above across a first section S₁ of the medium 1 which here is the whole area of the medium excluding window regions 4a, 4b as before. The second anti-static layer 6b may or may not be patterned (i.e. it could, for instance be a solid, uniform coating). Preferably, however, the second anti-static layer 6b is also patterned across a second section S₂ of the medium 1, which may or may not be the same as the first section S₁ and in this case encompasses the whole area of the medium excluding window region 4a (not 4b). The (second) pattern P₂ according to which the second anti-static layer 6b is arranged could be the same or different from the first pattern P₁ and could take the form of any of the examples given below.

Figure 1(d) shows a cross section through a third embodiment of a security print medium 1, which has the same plan view as shown in Figure 1(a). In this example, there are four opacifying layers 3a, 3b, 3c and 3d, arranged in the same manner as already described in relation to Figure 1(c). Similarly, first and second anti-static layers 6a, 6b are provided between opacifying layers 3a and 3c, and between layers 3b and 3d, respectively. However, in this embodiment the anti-static layers 6a, 6b continue across the window regions 4a, 4b. To prevent the anti-static layers 6a, 6b impacting the appearance of the window regions 4a, 4b, in this embodiment both anti-static layers 6a, 6b are formed of transparent, colourless anti-static materials. Examples of suitable transparent, colourless anti-static materials are given in WO-A-2014/000020. Again, one or both of the anti-static layers 6a, 6b will be patterned according to respective patterns P₁, P₂. In this case, the respective patterned sections S₁, S₂ preferably encompass the whole medium 1.

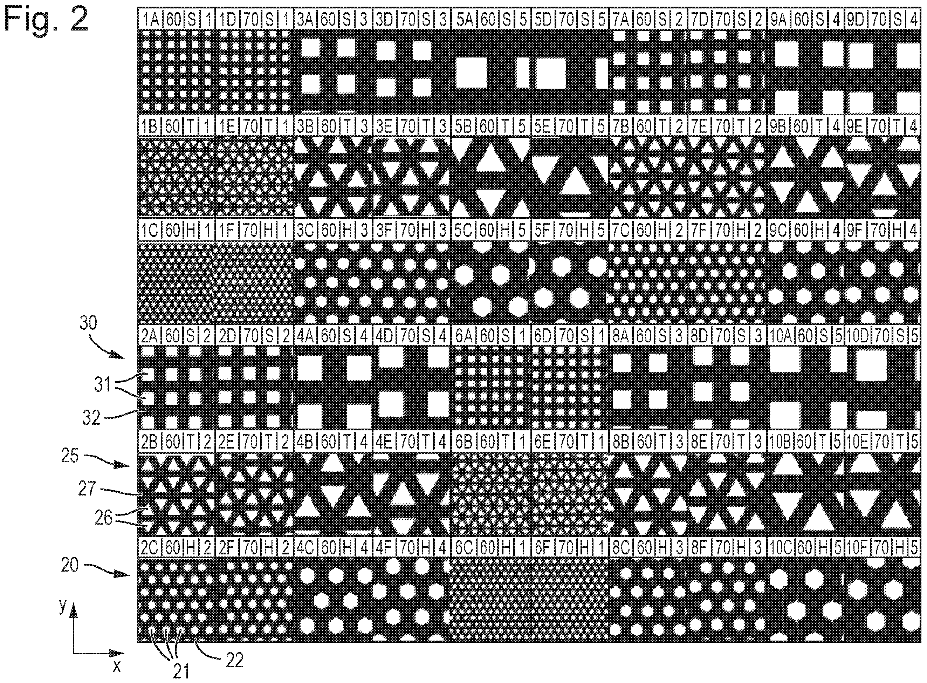

Each of the patterns P₁, P₂ according to which the first and second anti-static layers 6a, 6b are arranged in the sections S₁, S₂ (noting that only one of those layers need be provided, although providing both is preferred, and that only one of them need be patterned, although patterning both is preferred) comprises a two-dimensional array of gaps spaced by portions of anti-static material. Some examples of suitable patterns are shown in Figure 2. Here, 60 different examples of stepped geometric patterns are shown next to one another, arranged in a grid of 10 columns and 6 rows (note, only 30 different pattern layouts are shown, but in each case at two different engraving specifications, hence the 60 different patterns in total). Each entry in the grid depicts a portion of a different exemplary pattern, with the shaded areas representing the presence of anti-static material and the white areas representing the gaps. Of course, in practice, the anti-static material will typically be either transparent or light in colour (e.g. white, off-white or light grey) and so this is not how the patterns will appear to the viewer in reality - unless the anti-static material is intentionally coloured, as discussed further below. The patterns are also shown at various different magnified scales for clarity. The notation provided above each exemplary pattern denotes: 1) a pattern identifier (e.g. pattern "1A"); 2) the engraving spec by which it is applied, in lines per cm (e.g. "60" means "60 Ipc"); 3) a letter indicating the gap shape (e.g. "S" means "square"); and 4) the gap and line width in 100s of microns (e.g. "1" means "100 microns").

To focus on three of the examples, pattern 20 (identifier "2C") defines an array of hexagonal gaps 21 against a background 22 formed of a continuous portion of anti-static material, thereby forming a conductive network. Pattern 25 (identifier "2B") defines an array of triangular gaps 26 against a background 27 formed of a continuous portion of anti-static material, thereby forming a conductive network. Pattern 30 (identifier "2A") defines an array of square gaps 31 against a background 32 formed of a continuous portion of anti-static material, thereby forming a conductive network. All of the depicted patterns with linewidths of 200 microns or greater have been found to achieve the desired anti-static effect when deployed in one or both of the anti-static layers 6a, 6b across all or part of the medium 1. For those patterns shown with a line width of 100 microns, it was found that an engraving spec of 70 Ipc may not be sufficient to achieve a surface resistivity of less than 10¹⁰ Ohms/square, but this can be resolved using a deeper engraving spec (e.g. 60 Ipc or less).

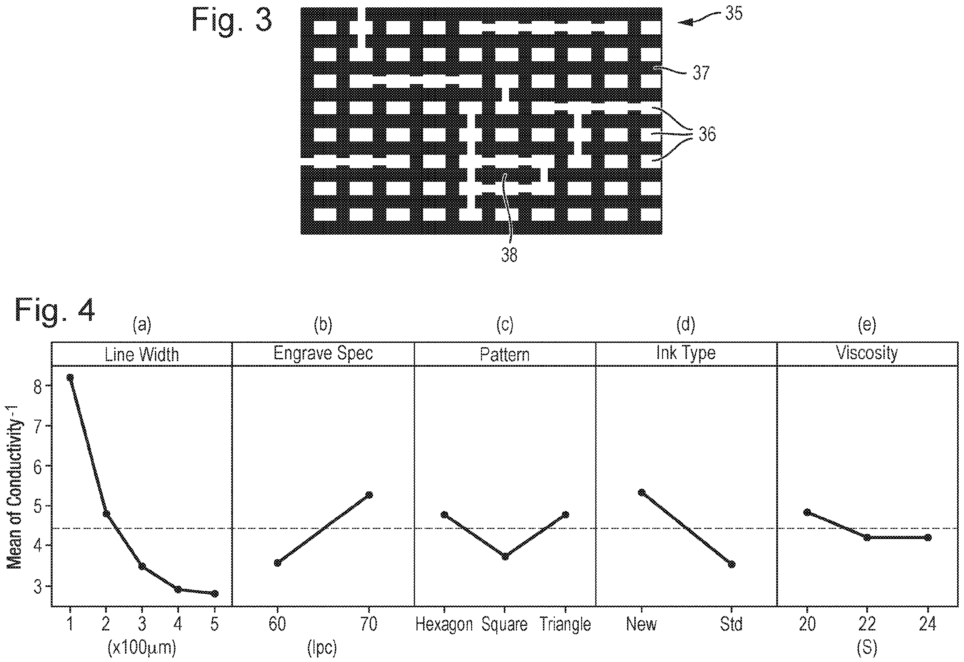

In the examples shown in Figure 2, the patterns all have a continuous background of anti-static material. However, it is not essential that all of the portions of anti-static material be joined to one another in this way in order to form a conductive network. Rather, all that is required is that at least one continuous conductive pathway exists across the pattern - preferably more than one such pathway. An example of another suitable pattern 35 in which the portions 37, 38 of anti-static material are not all contiguous is shown in Figure 3. Here it will be seen that some of the gaps 36 isolate some of the portions 37, 38 from one another. However, there are still multiple continuous conductive pathways through the anti-static material portions across the pattern as a whole.

In all the embodiments, it is desirable that, at least across the area in which the first (and/or second) anti-static layer 6 is present (whether patterned or unpatterned - that is, including the relevant section S₁ and/or S₂ but also any unpatterned areas where one or both of the anti-static layers extends), the security print medium 1 (as a whole - i.e. including all of its layers) has a surface resistivity of less than 10¹¹ Ohms/square (preferably less than 10¹⁰ Ohms/square), and preferably greater than or equal to 10⁶ Ohm/square. Advantageously, for best product consistency, all of the surface resistivity measurements taken across this area should be less than 10¹¹ Ohms/square (more preferably less than 10¹⁰ Ohms/square), and preferably greater than or equal to 10⁶ Ohms/square - that is, if any one sample measurement has a value outside this range, the product may be rejected. Surface resistivity levels of this sort have been found effective at dissipating static charge. For instance, a test substrate formed with a layer arrangement substantially shown in Figure 1(c) except for the omission of window regions 4b, in which the polymer substrate 2 is BOPP and the antistatic layers 6a, 6b are each formed of a conductive gravure ink and arranged according to pattern 20 shown in Figure 2 was measured as having a surface resistivity of approximately 3 × 10⁷ Ohms/square. The surface resistivity is measured on the outer surface of the complete security print medium, at room temperature (20 to 25 degrees C) and 50% relative humidity.

Suitable methods for measuring the surface resistivity include using a concentric ring probe, such as the Trek Model 152-1 Surface/Volume Resistance Meter available from Trek, Inc (www.trekinc.com) or the Hiresta-UX MCP-HT800 resistivity meter available from Mitsubishi Chemical Analytech (www.mccat.co.jp/global/); or a parallel resistivity probe such as the ACL 395 Resistivity Meter from ACL Incorporated (www.aclstaticide.com). Full details of suitable test methods for insulating materials (surface resistivity greater than 10⁷ Ohms/square) are set out in ASTM standard D257 and for moderately conductive materials (surface resistivity less than or equal to 10⁷ Ohms/square) in ASTM standard D4496. As explained in the paper "Surface Resistivity and Surface Resistance Measurements using a Concentric Ring Probe Technique" by W.A. Maryniak et al, 2013 (Trek Application Note Number 1005, available at www.trekinc.com), surface resistivity is the ratio of voltage drop per unit length to the surface current per unit width. As such, the physical SI unit of surface resistivity is Ohms. However, to differentiate surface resistivity from the actual resistance of a particular surface (also measured in Ohms), it is conventional to use the units "Ohms/square" for surface resistivity. What this means in practice is that any square area of the surface in question (no matter what size) has the indicated resistivity value.

The inventors have conducted experiments with different pattern types to determine their effect on the surface resistivity of the security print medium and schematic graphs illustrating the result of these experiments are shown in Figures 4(a) to (e). The pattern variables considered were: (a) line width (i.e. minimum dimension of portions of anti-static material); (b) engraving specification, measured in lines per cm (this is effectively a measure of coatweight - in the present experimental set up, 60 Ipc will have a deeper engraving in the printing plate that 70 Ipc, and hence a thicker layer of material will be transferred - however, it is also possible to maintain cell length and width and thus Ipc whilst varying the cell depth); (c) pattern gap shape - hexagonal, square and triangular gaps were trialled; (d) ink type - two types of ink (anti-static material) were tested, the "new" ink formulation has a 10 % lower concentration of conductive particles than the "old" ink formulation; and (e) viscosity of the ink, measured in seconds using the Zahn 2 cup method - different viscosities were achieved by varying the proportion of solvent in the ink.

It can be seen from the graphs that of all the variables tested, the line width had the greatest effect on surface resistivity, with smaller line widths leading to an (undesirable) increase in surface resistivity. Note, the y-axis in Figure 4 denotes (average conductivity)⁻¹ and hence is proportional to surface resistivity. However, the top of the y-axis scale depicted is still well below the maximum desirable surface resistivity of 10¹¹ Ohms/square. Hence, for improved (lower) resistivity, line widths of at least 100 microns, more preferably at least 200 microns are desirable. Gap widths can also be at least 50 microns, more preferably at least 100 microns.

Of the remaining variables tested, of most interest is that patterns with a square (or rectangular) gap shape were found to be most effective in terms of lowering the surface resistivity.

It has also been found preferable that the pattern be of regular periodicity in each of its two dimensions and uniform in this manner across the respective section of the medium 1.

Depending on the desired effect, the pattern(s) in the first (and optionally second) anti-static layers may be visible or substantially non-visible to the naked eye from the finished security print medium. In many cases, the latter will be desirable so that the security print medium appears substantially visually uniform to a person handling it, and acts as a solid-colour background against which any later-applied graphics layer can be easily viewed. If the pattern(s) are visible, without careful design, they could visually interfere with and potentially detract from the appearance of such graphics layers. Of course, if the anti-static layer(s) 6a, 6b are formed from transparent, colourless anti-static material(s), as described above in relation to Figure 1(d), then this will automatically be the case. However, in other preferred embodiments, one or both of the anti-static layers 6a, 6b are formed of a semi-opaque material and hence have an opacifying effect. In such cases, steps can still be taken to reduce the visibility of the pattern(s) in the finished product.

For example, an acceptable level of visual uniformity in the finished security print medium can be achieved through controlling the configuration of the first and/or second pattern(s). In particular, by reducing the scale of the pattern(s), the respective sections S₁, S₂ of the medium 1 can be made to appear relatively uniform to the naked eye. Gap and line widths of less than 500 microns, preferably less than 300 microns are well suited to achieving this. Alternatively or in addition, the patterned anti-static layer(s) may be overlapped with one or more uniform, unpatterned opacifying layers and the total thickness of these may be increased (relative to conventional document substrates) in order to better conceal the patterned anti-static layer(s). In some preferred embodiments, all of the opacifying layers overlapping the patterned sections of the anti-static layer(s) will be uniform in this manner.

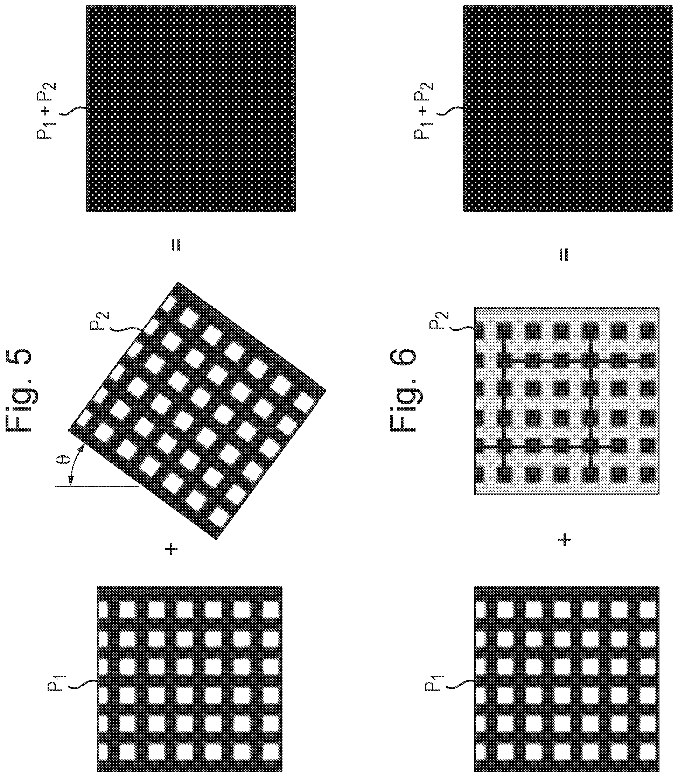

Alternatively or in addition, the provision of two patterned anti-static layers 6a, 6b (as in the Figure 1(c) embodiment) may be made use of to better conceal the patterns. An example of this is shown in Figure 5, which depicts an exemplary first pattern P₁ and an exemplary second pattern P₂ according to which the first and second anti-static layers 6a, 6b may respectively be arranged. In this example, the first and second patterns P₁ and P₂ are the same and each comprises an array of square gaps surrounded by a background of anti-static material. However, the two patterns are angularly offset from one another by a non-zero angle θ. As a result, the two overlapping patterns in combination interfere with one another, with the portions of one pattern tending to at least partially fill in the gaps of the other, and vice versa. The result is that the area of the medium 1 in which the first and second sections S₁, S₂ overlap appears substantially visually uniform (P₁ + P₂). It should be noted that whilst this approach works best where the first and second patterns are the same as one another, this is not essential and the two patterns could be different, e.g. in terms of gap shape or line width. This approach also has the advantage that the two anti-static layers 6a, 6b do not need to be applied in register with one another.

The angular offset θ is preferably configured so that the combination of the first and second patterns does not give rise to moiré interference effects, which could otherwise prove visually distracting. Techniques for positioning two patterns relative to one another so as to avoid moiré interference are well known and can be readily applied here. In preferred examples, angular offsets (θ) of between 20 and 35 degrees have been found to be effective.

In other examples, the first and second patterns P₁ and P₂ could be configured so as to complement each other and thereby, in combination, reduce the visibility of one another. An example of this is shown in Figure 6 which depicts an exemplary first pattern P₁ and an exemplary second pattern P₂ according to which the first and second anti-static layers 6a, 6b may respectively be arranged. Again, the construction of the medium 1 may be as depicted in Figure 1(c) for instance. In this case the first pattern P₁ is again an array of square gaps surrounded by a background of anti-static material. However, now the second pattern P₂ is substantially a negative version of the first pattern P₁: an array of square portions of anti-static material surrounded by a background in which the material is absent (i.e. gaps). To ensure a conductive network is still formed, however, some of the square portions of material are joined by conductive lines of the same material so as to form at least one conductive pathway as previously described. As a result, the two overlapping patterns in combination complement one another, with the portions of one pattern tending to at least partially fill in the gaps of the other, and vice versa. The result is that the area of the medium 1 in which the first and second sections S₁, S₂ overlap appears substantially visually uniform (P₁ + P₂). In this example there is preferably no angular offset between the patterns, and desirably the two anti-static layers are applied in register with one another.

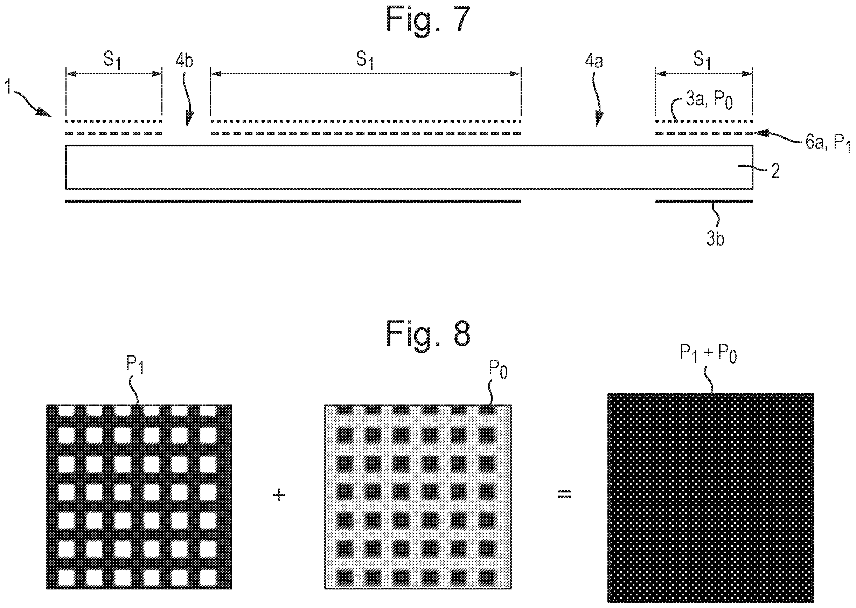

It is also possible to make use of one or more of the opacifying layers 3 to help conceal the pattern(s) in the first and/or second anti-static layer(s), by patterning one or more of the opacifying layers 3. Figure 7 shows an example of such an embodiment, in cross-section. Here, the construction of the security print medium 1 is much the same as that described above in relation to Figure 1(b). however, the opacifying layer 3a is also arranged according to a pattern P_{O} across the first section S₁. Figure 8 depicts an exemplary first pattern P₁ according to which the first anti-static layer 6a may be arranged, and an exemplary pattern P_{O} according to which the opacifying layer 3a may be arranged. As in the Figure 6 example, the first pattern P₁ is an array of square gaps surrounded by a background of anti-static material, and now the pattern P_{O} formed in the opacifying layer 3a is substantially a negative version of the first pattern P₁: an array of square portions of opacifying material surrounded by a background in which the material is absent (i.e. gaps). Since the opacifying layer 3a has no anti-static function, there is no need to join the portions of opacifying material. The result is that the area of the medium 1 in which the two patterns overlap appears substantially visually uniform (P₁ + P_{O}). In this example there is preferably no angular offset between the patterns, and desirably the first anti-static layer 6a and the opacifying layer 3a are applied in register with one another. This arrangement may be particular effective when combined with another, all-over unpatterned opacifying layer over the top (not shown).

In the above embodiments, the aim is to reduce the visibility of the pattern(s) in the anti-static layer(s), preferably so that the finished security print medium 1 appears visually unpatterned and uniform (to the naked eye) in the section 1. However, in other embodiments it is preferred to have the pattern(s) be visible to the naked eye from the finished product. This can be used as an additional security feature and, optionally, the pattern(s) may be used to convey information. In order for the pattern(s) to be visible, the anti-static material will of course need to be at least semi-opaque. Optionally, the anti-static material could be provided with a colour which contrasts with that of the (typically white, or off-white) opacifying layer(s), such as green, blue or red. Visibility of the pattern(s) can be ensured through configuration of the patterns themselves (e.g. ensuring that the gaps and portions are sufficiently large so as to be readily distinguishable from one another to the naked eye) and by their interaction with other layers in the structure (e.g. avoiding interference with other patterned layers - for instance, all other layers overlapping the patterned anti-static layer may be uniform and unpatterned).

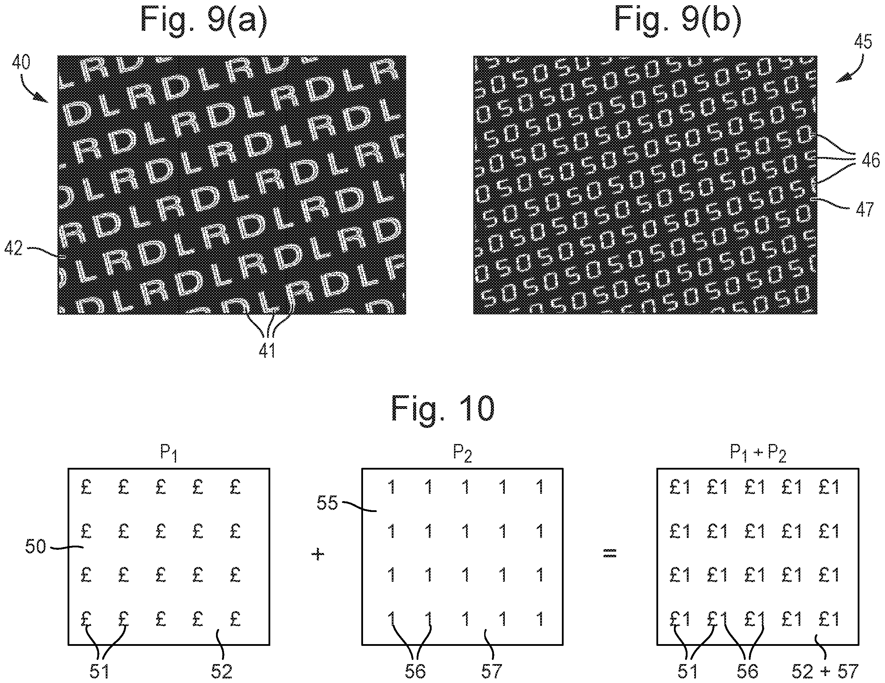

Figures 9(a) and (b) show two exemplary patterns 40, 45 according to which the first or second anti-static layer 6a, 6b can be arranged in such embodiments. Pattern 40, shown in Figure 9(a), comprises gaps 41 in the form of the letters "D", "L", "R" arrayed in two dimensions and spaced by portions of anti-static material 42 which in this example are all contiguous so as to form a continuous background. It will be noted that in this exemplary pattern, each of the letters 41 has a thin conductive line running through it, which decreases the nonconductive area of each letter and also joins the "islands" of anti-static material inside the "D" and the "R" to the surrounding background. However, this is not essential. In Figure 9(b), the pattern 45 comprises gaps 46 in the form of the digits "5" and "0", spaced and surrounded by a background of anti-static material 47. Again, in this example, the gaps 46 have thin conductive lines crossing them (the digits being designed so as to look like those on a conventional LCD screen) but this is not essential. Patterns such as these could be used in constructions of the sort shown in Figures 1(b) or 1(c) for example. Where the medium 1 comprises two anti-static layers 6a, 6b, preferably only one of them is patterned (e.g. with pattern 40 or 45) and the other is uniform so as not to visually interfere.

In other examples having two anti-static layers 6a, 6b, both could be patterned with the respective patterns being configured to co-operate with one another. Figure 10 illustrates such an example and here it should be noted that whilst the patterns show the gaps in black and the background in white this is purely for ease of illustration. In practice the gaps will have no anti-static material and the background will be of anti-static material, as in previous examples. Here, the first pattern P₁ according to which a section S₁ of the first anti-static layer 6a is formed is pattern 50 defining an array of gaps 51 each in the form of the currency symbol "£". The gaps 51 are surrounded by a continuous background 52 of anti-static material. The second pattern P₂ according to which a section S₂ of the second anti-static layer 6b is formed is pattern 55 defining an array of gaps 56 each in the form of the number "1". The gaps 56 are surrounded by a continuous background 57 of anti-static material. When the two patterns P₁ and P₂ are viewed in combination (P₁ + P₂), they co-operate such that the gaps 51 and gaps 56 appear beside one another, resulting in the appearance of an array of indicia each reading "£1". The first and second anti-static layers 6a, 6b are preferably applied in register with one another in order to achieve this. Of course, here it is assumed that the first and second sections S₁, S₂ overlap at least in part.

It would also be possible to achieve effects such as that shown in Figure 10 with a single patterned anti-static layer 6a or 6b if one of the opacifying layers 3 is also patterned according to a co-operating pattern. For instance, in the structure of Figure 7, anti-static layer 6a could be patterned with pattern 50 and opacifying layer 3a could be patterned with pattern 55.

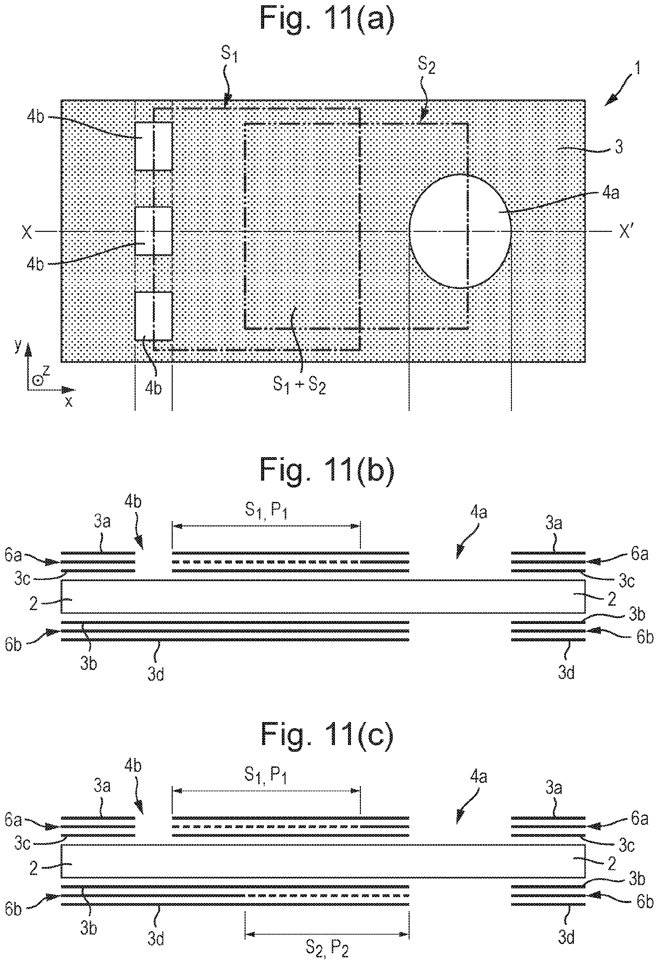

In the embodiments so far, it has been assumed that the whole of each anti-static layer 6a, 6b is patterned. However, this is not essential and only a section of the first anti-static layer need be patterned (the second anti-static layer, if provided being either uniform all over or also being patterned in at least a section thereof. Figure 11 illustrates some examples in which less than the whole of each anti-static layer is patterned. In all other respects, Figure 11(a) corresponds to Figure 1(a), and Figures 11(b) and (c) to Figure 1(c).

Thus, in Figure 11(a) the peripheries of a first section S₁ and a second section S₂ are indicated in dashed lines (which will typically not be visible in practice). It should be noted that section S₂ is not relevant to the embodiment of Figure 11(b) but only to 11(c).

In a first example, shown in cross-section in Figure 11(b) (the plan view corresponding to that shown in Figure 11(a), the first anti-static layer 6a is only patterned in first section S₁ thereof, which as shown in the plan view is a rectangular area occupying around 50% of the surface area of the medium 1. Inside this section S₁ the anti-static material forming layer 6a is patterned in the manner already described and any of the exemplary patterns mentioned above could be used. Outside the section S₁, the anti-static layer 6a is unpatterned and hence comprises a uniform, homogenous coating of anti-static material. As before, in this example the anti-static layer 6a does not extend into the window regions 4a, 4b. The second anti-static layer 6b in this example is not patterned but rather is a uniform, homogenous coating across its whole area. The second anti-static layer 6b is of course optional as previously discussed.

In a second example, shown in cross-section in Figure 11(b) (the plan view corresponding to that shown in Figure 11(a), the first anti-static layer 6a is again only patterned in first section S₁, and is uniform elsewhere. The second anti-static layer 6b in this example is likewise only patterned in a section thereof, denoted second section S₂, and is unpatterned elsewhere. The pattern P₂ according to which the second anti-static layer is arranged here may be the same or different from that of the first anti-static layer P₁. In this example, the second section S₂ is a substantially square area of the medium 1 occupying about 40% of its area. It is not essential that the first and second sections S₁, S₂ overlap one another but this is preferred in order to make use of the interaction between the patterns P₁, P₂ in accordance with any of the embodiments discussed above. In the embodiment shown, the two sections partially overlap one another in the area denoted S₁ + S₂. In particularly preferred embodiments, the two sections S₁, S₂ completely overlap one another. The greater the area of the medium 1 encompassed by each section S₁, S₂, the greater the material saving achieved. Therefore, preferably, each section S₁, S₂ occupies at least 25% of the medium 1, more preferably at least 50%, still preferably at least 75% and most preferably substantially 100% (as was the case in the Figure 1 embodiments).

In all of the above embodiments, it is preferred that each opacifying layer 3 has an optical density in the range 0.1 to 0.5 (as measured on a transmission densitometer such as the MacBeth TD932, with an aperture area equivalent to that of a circle with a 1mm diameter), more preferably 0.1 to 0.3. Advantageously, the opacifying layers 3 each have a brightness L* in CIE L*a*b* colour space of at least 70, preferably at least 80 and more preferably at least 90. Preferably, the opacifying layers 3 should be white, off-white or grey. The composition of each opacifying layer 3 may be the same or different to one another. The opacifying layers 3 each typically comprise a resin such as a polyurethane based resin, polyester based resin or an epoxy based resin and an opacifying pigment such as titanium dioxide (TiO2), silica, zinc oxide, tin oxide, clays or calcium carbonate.

The anti-static layer(s) 6a, 6b are each formed of an anti-static material such as a polymeric material with sufficient electrical conductivity to at least disperse static charge. In embodiments where the anti-static material is to be semi-opaque, it may comprise a composition much like any of the exemplary compositions for the opacifying layers given above, but with the addition of an electrically conductive particles such as graphite, carbon black, antimony-doped tin oxide (ATO), indium tin oxide (ITO) or silver nanowires, such as a static dissipative polymer gravure ink. Thus, the anti-static material could comprise a polymeric (and hence dielectric) binder such as a polyurethane based resin, polyester based resin or an epoxy based resin having a dispersion of conductive particles therein, and optionally also any of the opacifying pigments mentioned above. If the anti-static material is to be of a colour different from that of the opacifying layer(s), it may include in its composition one or more suitable colour pigments or dyes, either in addition to the opacifying pigment(s) or in place of. It would also be possible to use an intrinsically electrically conductive polymer for the anti-static material, such as poly(3,4-ethylenedioxythiophene) polystyrene sulfonate (PEDOT:PSS). If the anti-static material is to be transparent and colourless, any of the anti-static materials disclosed in WO-A-2014/00020 could be used for this purpose. It should be noted that where multiple anti-static layers are provided, each could be formed of the same or a different anti-static material.

The anti-static layer(s) 6a, 6b can each be applied by any suitable application process which allows their selective application in accordance with the respective pattern(s). Typically, each anti-static layer will be applied by gravure printing. Alternatively, any of flexographic printing, screen printing or lithographic printing may be used. The opacifying layer(s) 3 can be applied using any of the same techniques. The anti-static layer(s) 6a, 6b and the opacifying layer(s) 3 may preferably be applied in register with one another, as may be achieved by applying all of them in the same in-line process. As already mentioned, additional layers such as a primer could be applied to the substrate before the anti-static layer(s) and/or the opacifying layer(s). Further layers could be applied to the outside of the security print medium 1, such as a protective layer (preferably transparent) or a print-receptive coating.

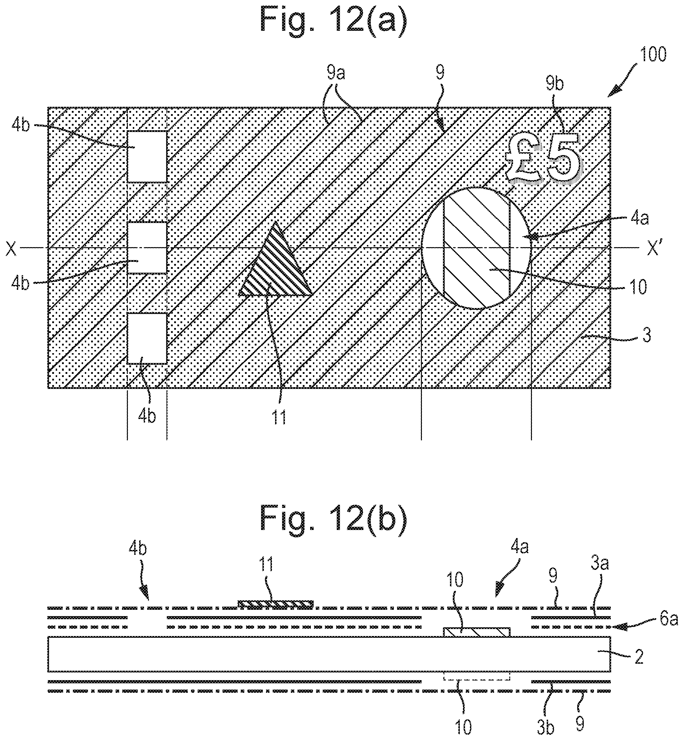

The above-described security print media 1 can then be processed into security documents. The processing steps involved in doing so may be carried out on a separate processing line, typically at a different manufacturing site and optionally by a different entity. An example of a security document 100 formed using the security print medium 1 described above in relation to Figures 1(a) and (b) is shown in Figure 12, (a) in plan view and (b) in cross-section. All of the components already provided as part of the security print medium 1, are as previously described in relation to Figure 1 and hence will not be described again.

The security document 100 comprises a graphics layer 9 applied in this example to both the outer surfaces of the security print medium 1, i.e. to the surface of outermost opacifying layers 3a and 3b. In other cases the graphics layer 9 may be applied only to one or other of the surfaces. As mentioned previously there could be intermediate layers between the opacifying layers 3 and the graphics layer 9, such as a protective layer or primer. In this example, the security document 100 is a banknote and hence the graphics layer 9 comprises background security patterns 9a (such as guilloches) as well as identifiers such as denomination information 9b. The graphics layer 9 could be applied in a single working or in multiple workings, optionally using more than one printing technique. Any available printing techniques can be utilised for forming the graphics layer as would be applied to a conventional polymer document substrate, e.g. intaglio printing, gravure printing, flexographic printing, lithographic printing etc.

Figure 12 also illustrates examples of other security devices which may optionally be applied to the security print media to form the security document, such as an optically variable device 10 in window 4a, e.g. a moiré magnification device, a lenticular device or an integral imaging device as may be formed by cast-curing or laminating a lens array on one side of the polymer substrate 2 and forming image elements on the other. Also depicted is a security device 11 in the form of a patch which has been applied to the surface of the security print media, e.g. by lamination or hot stamping. The security device 11 may comprise a diffractive optical element such as a hologram, for example.

The security documents and security devices of the current invention can optionally be made machine readable by the introduction of detectable materials in any of the layers or by the introduction of separate machine-readable layers. Detectable materials that react to an external stimulus include but are not limited to fluorescent, phosphorescent, infrared absorbing, thermochromic, photochromic, magnetic, electrochromic, conductive and piezochromic materials.

## Claims

1. A security print medium (1) for forming security documents therefrom comprising:
a transparent or translucent polymer substrate (2) having first and second opposing surfaces (2a, 2b);
one or more opacifying layers (3) disposed on the first and/or second surfaces of the polymer substrate, the or each opacifying layer being arranged across substantially the whole area of the polymer substrate, optionally excluding any window region(s) (4a, 4b) thereof, and comprising a semi-opaque material; and
a first anti-static layer (6a) disposed on the first or second surface of the polymer substrate and arranged across substantially the whole area of the polymer substrate, optionally excluding any window region(s) thereof, so as to overlap the one or more opacifying layers, the first anti-static layer comprising an anti-static material;
wherein, across at least a first section of the area of the polymer substrate, the first anti-static layer is arranged according to a first pattern, P₁, defining a two-dimensional array of gaps in which the anti-static material of the first anti-static layer is absent, spaced by portions in which the anti-static material of the first anti-static layer is present, at least some of the portions being connected to one another so as to form a conductive network across the polymer substrate.

2. A security print medium according to claim 1, wherein in the at least a first section of the area of the polymer substrate, the security print medium appears substantially uniform and unpatterned to the naked eye.

3. A security print medium according to claim 1 or claim 2, wherein the anti-static material of the first anti-static layer is substantially transparent and colourless, and preferably the first anti-static layer additionally extends across all or part of any window region.

4. A security print medium according to claim 1 or claim 2, wherein the anti-static material of the first anti-static layer is semi-opaque.

5. A security print medium according to any of the preceding claims, wherein the first anti-static layer (6a) is disposed on the first surface (2a) of the polymer substrate, and the security print medium further comprises a second anti-static layer (6b) disposed on the second surface (2b) of the polymer substrate, the second anti-static layer comprising an anti-static material, preferably a semi-opaque anti-static material.

6. A security print medium according to claim 5, wherein in at least a second section of the area of the polymer substrate, the second anti-static layer is arranged according to a second pattern, P₂, defining a two-dimensional array of gaps in which the anti-static material of the second anti-static layer is absent, spaced by portions in which the anti-static material of the second anti-static layer is present, wherein preferably the second section at least partially overlaps, and still preferably entirely overlaps the first section of the area of the polymer substrate.

7. A security print medium according to any of claims 6, wherein the first and second patterns have a non-zero angular offset relative to one another in the plane of the security print medium, preferably configured so as not to give rise to moiré interference effects between the first and second patterns, the non-zero angular offset more preferably being in the range of about 20 to about 35 degrees.

8. A security print medium according to any of the preceding claims, wherein at least in the first section of the area of the polymer substrate, all of the one or more opacifying layers are arranged uniformly across the first section in an unpatterned manner.

9. A security print medium according to any of the preceding claims, wherein the portions of the first and/or second pattern(s) surround the gaps and form a contiguous conductive background across the respective pattern.

10. A security print medium according to any of the preceding claims, wherein the gaps in the first and/or second pattern(s) are square, rectangular, circular, triangular, hexagonal or take the form of indicia such as alphanumeric characters or symbols.

11. A security print medium according to any of the preceding claims, wherein the first anti-static layer (6a) and, if provided, the second anti-static layer (6b) are printed layers, formed preferably by gravure printing of the anti-static material.

12. A security print medium according to any of the preceding claims, wherein the first and/or second section(s) each encompass at least 25% of the area of the polymer substrate, preferably at least 50% of the area of the polymer substrate, more preferably substantially the whole of the area of the polymer substrate excluding any window region(s).

13. A security print medium according to any of the preceding claims, wherein the one or more opacifying layers (3) define at least one window region (4a, 4b) on the polymer substrate in which at least one, preferably at least half, more preferably all of the opacifying layers are absent, such that the at least one window region is of higher translucency than the remainder of the security print medium, wherein optionally the at least one window region (4a, 4b) occupies no more than 10% of the surface area of the security print medium, preferably no more than 8%.

14. A security document comprising a security print medium according to any of claims 1 to 13, and at least one graphics layer (9) applied on the outermost opacifying layer(s) on the first and/or second surfaces of the polymer substrate, wherein the security document is preferably a bank note, an identification document, a passport, a licence, a cheque, a visa, a stamp or a certificate.

15. A method of making a security print medium, comprising:
providing a transparent or translucent polymer substrate (2) having first and second opposing surfaces (2a, 2b); and in any order:
applying one or more opacifying layers (3) onto the first and/or second surfaces of the polymer substrate, across substantially the whole area of the polymer substrate, optionally excluding any window region(s) (4a, 4b) thereof, the or each opacifying layer comprising a semi-opaque material; and
applying a first anti-static layer (6a) onto the first or second surface of the polymer substrate across substantially the whole area of the polymer substrate, optionally excluding any window region(s) thereof, so as to overlap the one or more opacifying layers, the first anti-static layer comprising an anti-static material;
wherein, across at least a first section of the area of the polymer substrate, the first anti-static layer is applied according to a first pattern, P₁, defining a two-dimensional array of gaps in which the anti-static material of the first anti-static layer is absent, spaced by portions in which the electrically conductive polymeric material of the first anti-static layer is present, at least some of the portions being connected to one another so as to form a conductive network across the polymer substrate.

16. A method of making a security document comprising:
making a security print medium in accordance with the method of claim 15; and
applying at least one graphics layer (9) to the outermost opacifying layer(s) on the first and/or second surfaces of the polymer substrate;
wherein preferably the security document is a bank note, an identification document, a passport, a licence, a cheque, a visa, a stamp or a certificate.

## Patentansprüche

1. Sicherheitsdruckmedium (1) zum Ausbilden von Sicherheitsdokumenten daraus, umfassend:
ein transparentes oder lichtdurchlässiges Polymersubstrat (2) mit einer ersten und einer zweiten gegenüberliegenden Oberfläche (2a, 2b);
eine oder mehrere opakisierende Schichten (3), die auf der ersten und/oder der zweiten Oberfläche des Polymersubstrats angeordnet sind, wobei die oder jede opakisierende Schicht im Wesentlichen über die gesamte Fläche des Polymersubstrats angeordnet ist, optional einen Fensterbereich/Fensterbereiche (4a, 4b) davon ausschließt und ein halbopakes Material umfasst; und
eine erste antistatische Schicht (6a), die auf der ersten oder der zweiten Oberfläche des Polymersubstrats angeordnet ist und im Wesentlichen über die gesamte Fläche des Polymersubstrats angeordnet ist, optional unter Ausschluss eines Fensterbereichs/Fensterbereiche davon, um die eine oder die mehreren opakisierenden Schichten zu überlappen, wobei die erste antistatische Schicht ein antistatisches Material umfasst;
wobei über wenigstens einen ersten Bereich der Fläche des Polymersubstrats die erste antistatische Schicht gemäß einem ersten Muster, P₁, angeordnet ist, das eine zweidimensionale Anordnung von Lücken definiert, in denen das antistatische Material der ersten antistatischen Schicht nicht vorhanden ist, die durch Abschnitte beabstandet sind, in denen das antistatische Material der ersten antistatischen Schicht vorhanden ist, wobei wenigstens einige der Abschnitte miteinander verbunden sind, um ein leitendes Netzwerk über das Polymersubstrat auszubilden.

2. Sicherheitsdruckmedium nach Anspruch 1, wobei das Sicherheitsdruckmedium in dem wenigstens einen ersten Bereich der Fläche des Polymersubstrats mit bloßem Auge im Wesentlichen einheitlich und ungemustert erscheint.

3. Sicherheitsdruckmedium nach Anspruch 1 oder 2, wobei das antistatische Material der ersten antistatischen Schicht im Wesentlichen transparent und farblos ist und sich die erste antistatische Schicht vorzugsweise zusätzlich über den gesamten oder einen Teil eines Fensterbereichs erstreckt.

4. Sicherheitsdruckmedium nach Anspruch 1 oder 2, wobei das antistatische Material der ersten antistatischen Schicht halbopak ist.

5. Sicherheitsdruckmedium nach einem der vorhergehenden Ansprüche, wobei die erste antistatische Schicht (6a) auf der ersten Oberfläche (2a) des Polymersubstrats angeordnet ist und das Sicherheitsdruckmedium ferner eine zweite antistatische Schicht (6b) umfasst, die auf der zweiten Oberfläche (2b) des Polymersubstrats angeordnet ist, wobei die zweite antistatische Schicht ein antistatisches Material, vorzugsweise ein halbopakes antistatisches Material, umfasst.

6. Sicherheitsdruckmedium nach Anspruch 5, wobei in wenigstens einem zweiten Bereich der Fläche des Polymersubstrats die zweite antistatische Schicht gemäß einem zweiten Muster P₂ angeordnet ist, das eine zweidimensionale Anordnung von Lücken definiert, in denen das antistatische Material der zweiten antistatischen Schicht nicht vorhanden ist, die durch Abschnitte beabstandet sind, in denen das antistatische Material der zweiten antistatischen Schicht vorhanden ist, vorzugsweise wobei der zweite Bereich den ersten Bereich der Fläche des Polymersubstrats wenigstens teilweise überlappt, und stärker bevorzugt diesen vollständig überlappt.

7. Sicherheitsdruckmedium nach einem der Ansprüche 6, wobei das erste und das zweite Muster einen von Null verschiedenen Winkelversatz relativ zueinander in der Ebene des Sicherheitsdruckmediums aufweisen, der vorzugsweise dazu konfiguriert ist, keine Moiré-Musterinterferenzeffekte zwischen dem ersten und dem zweiten Muster hervorzurufen, wobei der von Null verschiedene Winkelversatz vorzugsweise in dem Bereich von etwa 20 bis etwa 35 Grad liegt.

8. Sicherheitsdruckmedium nach einem der vorhergehenden Ansprüche, wobei wenigstens in dem ersten Bereich der Fläche des Polymersubstrats alle der einen oder der mehreren opakisierenden Schichten einheitlich über den ersten Bereich auf eine ungemusterte Weise angeordnet sind.

9. Sicherheitsdruckmedium nach einem der vorhergehenden Ansprüche, wobei die Abschnitte des ersten und/oder des zweiten Musters/der ersten und/oder der zweiten Muster die Lücken umgeben und einen zusammenhängenden leitfähigen Hintergrund über das jeweilige Muster ausbilden.

10. Sicherheitsdruckmedium nach einem der vorhergehenden Ansprüche, wobei die Lücken in dem/den ersten und/oder dem/den zweiten Muster(n) quadratisch, rechteckig, kreisförmig, dreieckig, sechseckig sind oder die Form von Zeichen wie alphanumerischen Buchstaben oder Symbolen annehmen.

11. Sicherheitsdruckmedium nach einem der vorhergehenden Ansprüche, wobei die erste antistatische Schicht (6a) und, falls bereitgestellt, die zweite antistatische Schicht (6b) gedruckte Schichten sind, die vorzugsweise durch Tiefdruck des antistatischen Materials ausgebildet werden.

12. Sicherheitsdruckmedium nach einem der vorhergehenden Ansprüche, wobei der/die erste(n) und/oder zweite(n) Bereich(e) jeweils wenigstens 25 % der Fläche des Polymersubstrats, vorzugsweise wenigstens 50 % der Fläche des Polymersubstrats und stärker bevorzugt im Wesentlichen die gesamte Fläche des Polymersubstrats mit Ausnahme eines Fensterbereichs/Fensterbereiche einschließt/einschließen.

13. Sicherheitsdruckmedium nach einem der vorhergehenden Ansprüche, wobei die eine oder die mehreren opakisierenden Schichten (3) wenigstens einen Fensterbereich (4a, 4b) auf dem Polymersubstrat definieren, in dem wenigstens eine, vorzugsweise wenigstens die Hälfte, stärker bevorzugt alle opakisierenden Schichten nicht vorhanden sind, sodass der wenigstens eine Fensterbereich eine höhere Lichtdurchlässigkeit als der Rest des Sicherheitsdruckmediums aufweist, wobei optional der wenigstens eine Fensterbereich (4a, 4b) nicht mehr als 10 %, vorzugsweise nicht mehr als 8 % des Oberflächenbereichs des Sicherheitsdruckmediums einnimmt.

14. Sicherheitsdokument, umfassend ein Sicherheitsdruckmedium nach einem der Ansprüche 1 bis 13 und wenigstens eine Grafikschicht (9), die auf die äußerste(n) opakisierende(n) Schicht(en) auf der ersten und/oder der zweiten Oberfläche des Polymersubstrats aufgebracht ist, wobei das Sicherheitsdokument vorzugsweise eine Banknote, ein Ausweisdokument, ein Reisepass, eine Lizenz, ein Scheck, ein Visum, ein Stempel oder ein Zertifikat ist.

15. Verfahren zum Herstellen eines Sicherheitsdruckmediums, umfassend:
Bereitstellen eines transparenten oder lichtdurchlässigen Polymersubstrat (2) mit einer ersten und einer zweiten gegenüberliegenden Oberfläche (2a, 2b); und in beliebiger Reihenfolge:
Aufbringen einer oder mehrerer opakisierender Schichten (3) auf die erste und/oder die zweite Oberfläche des Polymersubstrats im Wesentlichen über die gesamte Fläche des Polymersubstrats, wobei optional ein Fensterbereich/Fensterbereiche (4a, 4b) davon ausgeschlossen wird/werden, wobei die oder jede Schicht ein halbopakes Material umfasst; und
Aufbringen einer ersten antistatischen Schicht (6a) auf die erste oder die zweite Oberfläche des Polymersubstrats über im Wesentlichen die gesamte Fläche des Polymersubstrats, optional unter Ausschluss eines Fensterbereichs/Fensterbereiche davon, um die eine oder die mehreren opakisierenden Schichten zu überlappen, wobei die erste antistatische Schicht ein antistatisches Material umfasst;
wobei über wenigstens einen ersten Bereich der Fläche des Polymersubstrats die erste antistatische Schicht gemäß einem ersten Muster, P₁, aufgebracht wird, das eine zweidimensionale Anordnung von Lücken definiert, in denen das antistatische Material der ersten antistatischen Schicht nicht vorhanden ist, die durch Abschnitte beabstandet sind, in denen das elektrisch leitende Polymermaterial der ersten antistatischen Schicht vorhanden ist, wobei wenigstens einige der Abschnitte miteinander verbunden sind, um ein leitendes Netzwerk über das Polymersubstrat auszubilden.

16. Verfahren zum Herstellen eines Sicherheitsdokuments, umfassend:
Herstellen eines Sicherheitsdruckmediums in Übereinstimmung mit dem Verfahren nach Anspruch 15; und
Aufbringen wenigstens einer Grafikschicht (9) auf die äußerste(n) opakisierende(n) Schicht(en) auf der ersten und/oder der zweiten Oberfläche des Polymersubstrats,
wobei das Sicherheitsdokument vorzugsweise eine Banknote, ein Ausweisdokument, ein Reisepass, eine Lizenz, ein Scheck, ein Visum, ein Stempel oder ein Zertifikat ist.

## Revendications

1. Support d'impression de sécurité (1) pour la réalisation de documents de sécurité, comprenant :
un substrat polymère transparent ou translucide (2) possédant des première et deuxième surfaces opposées (2a, 2b) ;
une ou plusieurs couches opacifiantes (3) disposées sur les première et/ou deuxième surfaces du substrat polymère, la ou chaque couche opacifiante étant agencée sur substantiellement l'intégralité de la zone du substrat polymère, en option à l'exclusion de ses éventuelles zones de fenêtre (4a, 4b), et comprenant un matériau semi-opaque ; et
une première couche antistatique (6a) disposée sur la première ou la deuxième surface du substrat polymère et agencée à travers substantiellement l'intégralité de la zone du substrat polymère, en option à l'exclusion de ses éventuelles zones de fenêtre, de façon à chevaucher la ou plusieurs couches opacifiantes, la première couche antistatique comprenant un matériau antistatique ;
la première couche antistatique étant agencée, sur au moins une première section de la zone du substrat polymère, selon un premier motif, P₁, définissant un réseau bidimensionnel d'écarts, duquel est absent le matériau antistatique de la première couche antistatique, espacé par des parties dans lesquelles le matériau antistatique de la première couche antistatique est présent, au moins certaines des parties étant connectées l'une à l'autre de façon à former un réseau conducteur à travers le substrat polymère.

2. Support d'impression de sécurité selon la revendication 1, le support d'impression de sécurité présentant, à l'oeil nu, dans au moins une première section de la zone du substrat polymère, un aspect substantiellement uniforme et sans motif.

3. Support d'impression de sécurité selon la revendication 1 ou la revendication 2, le matériau antistatique de la première couche antistatique étant substantiellement transparent et incolore, et, de préférence, la première couche antistatique s'étendant en outre sur l'ensemble, ou une partie, de toute zone de fenêtre.

4. Support d'impression de sécurité selon la revendication 1 ou la revendication 2, le matériau antistatique de la première couche antistatique étant semi-opaque.

5. Support d'impression de sécurité selon une quelconque des revendications précédentes, la première couche antistatique (6a) étant disposée sur la première surface (2a) du substrat polymère, et le support d'impression de sécurité comprenant en outre une deuxième couche antistatique (6b) disposée sur la deuxième surface (2b) du substrat polymère, la deuxième couche antistatique comprenant un matériau antistatique, de préférence un matériau antistatique semi-opaque.

6. Support d'impression de sécurité selon la revendication 5, dans lequel, dans au moins une deuxième section de la zone du substrat polymère, la deuxième couche antistatique est agencée selon un deuxième motif, P₂, définissant un réseau bidimensionnel d'écarts, duquel est absent le matériau antistatique de la deuxième couche antistatique, espacé par des parties dans lesquelles le matériau antistatique de la deuxième couche antistatique est présent, de préférence la deuxième section chevauchant au moins partiellement, et, mieux encore, chevauchant entièrement la première section de la zone du substrat polymère.

7. Support d'impression de sécurité selon une quelconque des revendications 6, les premier et deuxième motifs présentant un décalage angulaire non nul entre eux dans le plan du support d'impression de sécurité, configuré de préférence de façon à ne pas donner lieu à des effets d'interférence de moiré entre les premier et deuxième motifs, mieux encore le décalage angulaire non nul étant compris dans la plage allant d'environ 20 à environ 35 degrés.

8. Support d'impression de sécurité selon une quelconque des revendications précédentes, dans lequel, au moins dans la première section de la zone du substrat polymère, l'intégralité de l'une ou plusieurs couches opacifiantes étant agencée de façon uniforme sur la première section de façon sans motif.

9. Support d'impression de sécurité selon une quelconque des revendications précédentes, les parties des premier et/ou deuxième motifs entourant les écarts et formant un fond conducteur contigu sur le motif respectif.

10. Support d'impression de sécurité selon une quelconque des revendications précédentes, les écarts dans les premier et/ou deuxième motifs étant carrés, rectangulaires, circulaires, triangulaires, hexagonaux, ou prenant la forme d'indices, tels que des caractères ou des symboles alphanumériques.

11. Support d'impression de sécurité selon une quelconque des revendications précédentes, la première couche antistatique (6a), et, si elle est prévue, la deuxième couche antistatique (6b), sont des couches imprimées, formées de préférence par héliogravure du matériau antistatique.

12. Support d'impression de sécurité selon une quelconque des revendications précédentes, les première et/ou deuxième sections englobant chacune au moins 25% de la zone du substrat polymère, de préférence au moins 50% de la zone du substrat polymère, mieux encore substantiellement l'intégralité de la zone du substrat polymère, à l'exclusion d'éventuelles zones de fenêtre.

13. Support d'impression de sécurité selon une quelconque des revendications précédentes, la ou plusieurs couches opacifiantes (3) définissant au moins une zone de fenêtre (4a, 4b) sur le substrat polymère, de laquelle est absente au moins une, de préférence au moins la moitié, mieux encore l'intégralité des couches opacifiantes, de sorte qu'au moins une zone de fenêtre présente une translucidité supérieure à celle du restant du support d'impression de sécurité, en option l'au moins une zone de fenêtre (4a, 4b) occupant au maximum 10% de la superficie du support d'impression de sécurité, de préférence pas plus de 8%.

14. Document de sécurité comprenant un support d'impression de sécurité selon une quelconque des revendications 1 à 13, et au moins une couche graphique (9) sur les couches opacifiantes extérieures sur les première et/ou deuxième surfaces du substrat polymère, le document de sécurité étant de préférence un billet de banque, une pièce d'identité, un passeport, un permis, un chèque, un visa, un cachet ou un certificat.

15. Procédé de réalisation d'un support d'impression de sécurité, comprenant :
l'agencement d'un substrat polymère transparent ou translucide (2) possédant des première et deuxième surfaces opposées (2a, 2b) ; et, dans un ordre quelconque :
l'application d'une ou plusieurs couches opacifiantes (3) sur les première et/ou deuxième surfaces du substrat polymère, à travers substantiellement l'intégralité de la zone du substrat polymère, en option à l'exclusion de ses éventuelles zones de fenêtre (4a, 4b), la ou chaque couche opacifiante comprenant un matériau semi-opaque ; et
l'application d'une première couche antistatique (6a) sur la première ou la deuxième surface du substrat polymère à travers substantiellement l'intégralité de la zone du substrat polymère, en option à l'exclusion de ses éventuelles zones de fenêtre, de façon à chevaucher la ou plusieurs couches opacifiantes, la première couche antistatique comprenant un matériau antistatique ;
la première couche antistatique étant appliquée, sur au moins une première section de la zone du substrat polymère, conformément à un premier motif, P₁, définissant un réseau bidimensionnel d'écarts, duquel est absent le matériau antistatique de la première couche antistatique, espacé par des parties dans lesquelles le matériau polymère électro-conducteur de la première couche antistatique est présent, au moins certaines des parties étant connectées l'une à l'autre de façon à former un réseau conducteur à travers le substrat polymère.

16. Procédé de réalisation d'un support d'impression de sécurité, comprenant :
la réalisation d'un support d'impression de sécurité selon le procédé de la revendication 15 ; et
l'application d'au moins une couche graphique (9) sur les couches opacifiantes extérieures sur les première et/ou deuxième surfaces du substrat polymère,
le document de sécurité étant de préférence un billet de banque, une pièce d'identité, un passeport, un permis, un chèque, un visa, un cachet ou un certificat.
